Europäisches Patentamt

European Patent Office

Office européen des brevets

(11) Publication number: **0 229 853**
**B1**

# EUROPEAN PATENT SPECIFICATION

(45) Date of publication of patent specification: **07.03.90**

(21) Application number: **85115066.4**

(22) Date of filing: **27.11.85**

(51) Int. Cl.⁵: **F 15 B 21/04, G 05 D 16/16**

(54) **Hydraulic pressure regulating arrangement.**

(30) Priority: **04.12.84 JP 255051/84**

(43) Date of publication of application:
**29.07.87 Bulletin 87/31**

(45) Publication of the grant of the patent:
**07.03.90 Bulletin 90/10**

(84) Designated Contracting States:
**DE FR GB**

(56) References cited:
**DE-A-2 039 943**
**FR-A-2 529 625**
**GB-A-1 315 746**
**GB-A-2 123 988**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Ueki, Akihiro**
**Sagamiryo AIII No. 4688-1, Sobudai**
**Zama City (JP)**
Inventor: **Shibayama, Takashi**
**No. 741-1 B210, Ishida**
**Isehara City (JP)**
Inventor: **Sugano, Kazuhiko**
**Totsuka-hairaizu 1022 No. 884-1, Kamikurata-cho**
**Totsuka-ku Yokohama City (JP)**

(74) Representative: **Patentanwälte Grünecker,**
**Kinkeldey, Stockmair & Partner**
**Maximilianstrasse 58**
**D-8000 München 22 (DE)**

## Description

Background of the invention

The present invention relates to a hydraulic pressure regulating arrangement for generating a servo actuating fluid pressure at which hydraulic fluid pressure is applied to a servo motor for friction device of an automatic transmission.

Hydraulic control systems for automatic transmission employ an engine driven pump that pumps hydraulic fluid out of a source into a servo actuating fluid supply line. From GB—A—1 315 746 a hydraulic control system of an automotive automatic power transmission is known comprising a line pressure regulator valve for regulating a line pressure in the hydraulic control system. The hydraulic pressure regulating arrangement of this document comprises a source of hydraulic fluid with temperature dependent viscosity, means defining a servo actuating fluid supply line leading to a hydrodynamic torque convertor, pump means for pumping hydraulic fluid out of said source into said servo actuating fluid supply line. A pressure regulating valve has a drain port opening to said servo actuating fluid supply line, a feedback chamber communicating with said servo actuating fluid supply line and pressure responsive means for valving said drain port responsive to hydraulic pressure within said feedback chamber. Furthermore, said pressure responsive means comprises spool means and a resilient means biasing said spool means to the position where spool means closes said drain port, and said spool means having a pressure acting area subjected to hydraulic fluid pressure within the feedback chamber to be urged against resilient means in a direction to increase the opening degree of said drain port.

Because, the viscosity of hydraulic fluid used in the automatic transmission is temperature dependent and gets high at low ambient temperatures, the automatic transmission shows very poor start-up performance if ambient temperature is very low to an extent lower than such as −10°C. That is, at such low ambient temperature, hydraulic fluid pressure builds up abnormally slowly within a servo motor for a starting friction device such as a forward clutch, when a manual shift level is set to a forward drive range position immediately after the pump starts pumping hydraulic fluid into the servo actuating fluid supply line. This is because hyraulic fluid passes through the servo actuating fluid supply line at an abnormally slow rate owing to high viscosity thereof. Thus, it takes a considerable time for the transmission to assume a power transferrable state where the forward clutch is engaged after the manual shift lever is set to the forward drive range position. This delay is often called as "low temperature lag".

It is therefore an object of the present invention to provide a hydraulic pressure regulating arrangement for generating a servo actuating fluid pressure under which hydraulic fluid is supplied to a servo motor which provides good start-up performance especially when ambient temperature is very low.

It is a further object of the invention to provide an automatic transmission for a motor vehicle having an engine, the transmission being provided with good start-up performance.

Summary of the Invention

According to the present invention, the hydraulic pressure regulating arrangement comprises means for defining a reservoir communicating with said servo actuating fluid supply line and being capable of receiving a predetermined volume of hydraulic fluid, a flow restrictor means which is fluidly disposed between said reservoir and said servo actuating supply line for restricting flow of hydraulic fluid entering said reservoir, and means for causing said pressure responsive means to reduce opening degree of said drain port until said reservoir is filled with said hydraulic fluid, thereby to allow high servo actuating fluid pressure to build up in the servo actuating fluid supply line

Since the flow rate of hydraulic fluid entering the reservoir is restricted by the flow restrictor, the reservoir is left unfilled for a period of time after start-up of the pump and thus feedback pressure does not build up within the feedback chamber for this period of time. Thus, since pressure regulation is not initiated by the pressure regulating valve until the feedback pressure builds up in the feedback chamber, hydraulic fluid biased by hydraulic pressure unregulated by the pressure regulating valve is supplied quickly to the servo motor, thus shortening time till engagement of the associated friction device.

Alternatively, in order to keep servo actuating fluid pressure at a high level for a period of time after start-up of a pump, a signal pressure regulating valve which produces a regulated signal fluid pressure upon which a servo actuating fluid pressure produced by a servo actuating fluid pressure regulating valve is boosted is modified such that feedback pressure build-up within a feedback chamber of the signal pressure regulating valve is delayed by the provision of a fluid reservoir communicating with a servo actuating fluid supply line and a flow restrictor for restricting flow of hydraulic fluid entering the reservoir. The feedback chamber communicates with the reservoir so that no fluid pressure builds up within the feedback chamber until hydraulic fluid discharged by the pump fills the reservoir. Since the flow rate of hydraulic fluid entering the reservoir is restricted by the flow restrictor, the reservoir is left unfilled for a period of time after start-up of the pump and thus feedback pressure does not build up within the feedback chamber for this period of time. Since the signal pressure regulating valve does not effect pressure regulation, a signal fluid pressure unregulated is supplied to the servo actuating fluid pressure regulating valve to help same boost the level of the servo actuating fluid pressure in the servo actuating fluid supply line.

Brief Description of the Drawings

Fig. 1 is a diagram showing a first embodiment;

Fig. 2 is a diagram showing a second embodiment;

Fig. 3 is a diagram showing a third embodiment;

Fig. 4 is a diagram showing a fourth embodiment;

Fig. 5 is a diagram showing a fifth embodiment; and

Fig. 6 is a diagram showing a sixth embodiment.

Description of Embodiments

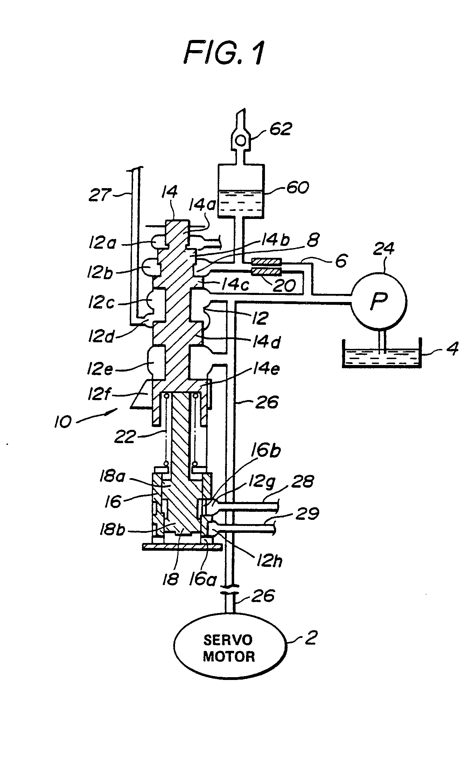

Hereinafter, embodiments according to the present invention are described in connection with Figs. 1 to 6 of the accompanying drawings.

(First Embodiment)

Referring to Fig. 1, there is shown a hydraulic pressure regulating arrangement according to the present invention which includes a pressure regulating valve 10 in the form of a line pressure regulator valve. The line pressure regulator valve 10 is formed with a valve bore 12. Disposed within the valve bore 12 are a pressure responsive valve spool 14, a hollow sleeve 16, a plug 18 that is fit in the hollow sleeve 16, and a spring 22 that acts on the spool 14 to bias same upwardly as viewed in Fig. 1. There are a plurality of ports 12a ~ 12h opening to the valve bore 12. The port 12a is supplied with hydraulic pressure from a pressure modifier valve, not shown, when a predetermined condition is satisfied. The ports 12b, 12c and 12e are connected to a servo actuating fluid supply line leading to a servo motor 2 for a friction device, such as a forward clutch of an automobile automatic transmission. Although, not shown, a manual selector valve operable by a manual shift lever may be fluidly disposed in the servo actuating fluid supply line 26 in a conventional manner. The supply line 26 leads from a pump 24 that is driven by an engine. The pump 24 is operable to pump hydraulic fluid out of a source or tank 4 into the supply line 26. A flow restrictor 20 of the choke type is disposed in a branch line 6 connecting the port 12b with the supply line 26. The restrictor 20 of the choke type has a length which is long in proportion to its flow cross sectional area. A fluid reservoir, in the form of a chamber 60, is provided between the restrictor 20 of the choke type and the port 12b in such a manner that it communicates with the supply line 26 via the restrictor 20 and communicates in an unrestricted manner with the port 12b opening to a feedback chamber 8. The chamber 60 has a predetermined volume. The chamber 60 is provided with a one-way valve 62 via which it is communicable with the ambient atmosphere. The port 12d serves as a discharge port via which hydraulic fluid from the port 12c is supplied to a torque converter, for example, via a torque converter fluid supply line 27. The port 12f serves as a drain port via which hydraulic fluid from the port 12c is drained. The port 12g is connected with a reverse booster line 28 that is supplied with line pressure (servo actuating fluid pressure) when the manual selector valve is set to R-range (reverse drive range). The port 12h is connected with a throttle boost line 29 that is supplied with throttle pressure (signal pressure) variable with engine load. Although, not shown in Fig. 1, the throttle pressure is produced by a throttle pressure by regulating line pressure in response to engine manifold vacuum or throttle position. The spool 14 is formed with a plurality of lands 14a ~ 14e. The lands 14c, 14d and 14e are the same in diameter. The land 14b is smaller in diameter than they are. The land 14a is smaller in diameter than the land 14b is. Formed between the lands 14a and 14b is a pressure acting area which hydraulic pressure developed in the port 12a acts upon. Formed between the lands 14b and 14c is a feedback pressure acting area which hydraulic pressure in the port 12b acts upon. The sleeve 16 is formed with a step bore which lands 18a and 18b of the plug 18 are slidably fit in. The land 18b is smaller in diameter than the land 18a is. The sleeve 16 is formed with a radial passage 16a via which hydraulic pressure from the port 12h passes to act upon the bottom end face (as viewed in Fig. 1) of the land 18b. It is formed also with another radial passage 16b via which hydraulic pressure from the port 12g passes to act upon a pressure acting area formed between the lands 18a and 18b.

The operation of this embodiment is described.

It is now assumed that hyraulic pressure at the port 12b is equal to hydraulic pressure at the port 12e. Under this condition, the spool 14 of the regulator valve 10 is subject to hydraulic pressure at the port 12b and that at the port 12a, and urged to move downward as viewed in Fig. 1 against the action of the spring 22. At its spring set position, the spool 14 has its lands 14d and 14e to close the ports 12d and 12f, respectively. An increase in the hydraulic pressure at the port 12b causes a downward movement of the spool 14 against the spring 22, causing the land 14d to open the port 12d and a further increase in the hydraulic pressure at the port 12b causes a further downward movement of the spool 14, causing the land 14e to open the port 12f. The ports 12d and 12f are thus allowed to open to the supply line 26, draining hydraulic fluid and thus causing a reduction in hydraulic pressure in the servo line 26 and also at the port 12b. This reduction in hydraulic pressure causes the spool 14d to move upward under the influence of the spring 22, causing the land 14e to reduce the opening degree of the port 12f and, if this reduction is excessive, causing the land 14d to reduce the opening degree of the port 12d. As a result, an increase in hydraulic pressure takes place. In this manner, the spool 14 regulates hydraulic pressure in the supply line 26 by varying opening degree of the port 12d and opening degree of the port 12f until the total of downward forces resulting from hydraulic pressures at the ports 12a and 12b balance with the total of upward force by the spring 22. The action of the spring 22 is assisted by a line pressure booster including the plug 18. The plug 18 is urged to move upward, as viewed in Fig. 1 as signal pressure (throttle pressure) at the port 12h increases so that an increase in the throttle pressure causes an increase in hydraulic pressure (line pressure) in the supply line 26. The plug 18 is urged to move upward to boost the line pressure also when hydraulic pressure (manual second boost pressure) is applied to the port 12g.

Let us now consider the case when all of hydraulic fluid is discharged from the port 12b and also from the chamber 60 which would occur when a considerably long time has past after the pump 24 has ceased its operation. No hydraulic pressure exists at the port 12b under this condition, allowing the spool 14 to assume its spring set position, i.e., its uppermost position, where both of the ports 12d and 12f are closed.

When, under this condition, the pump 24 starts operating to discharge hydraulic fluid into the supply line 26, hydraulic fluid flows past the restrictor 20 into the chamber 60 until it fills in the chamber 60. Air displaced by the hydraulic fluid entering the chamber 60 is allowed to escape toward the ambient atmosphere via the one-way valve 62. When the hydraulic fluid fills the chamber 60, the one-way valve 62 is closed. Hydraulic pressure build-up at the port 12b begins after the chamber 60 has been filled with hydraulic fluid. This pressure build-up causes the spool 14 to move downward as viewed in Fig. 1, initiating pressure regulation of hydraulic pressure in the supply line 26. Thus, a considerable period of time passes after the pump 24 is set into its operation until the pressure regulator valve 10 starts effecting pressure regulation by valving the ports 12d and 12f. The length of this time, i.e., a delay, is dependent on the volume of the chamber 60 and the flow rate of fluid flow determined by the size and design of the flow restrictor 20.

As mentioned before, the spool 14 stays in the spring set position where discharge of hydraulic fluid via the ports 12d and 12f is prohibited during the delay after the pump 24 starts its operation, so that hydraulic pressure in the supply line 26 is kept at a high level. This high hydraulic pressure forces hydraulic fluid to flow quickly through the supply line 26 no matter how high the viscosity of hydraulic fluid might be, thus quickly filling the associated servo motor 2. As a result, the servo motor 2 is quickly set into operation immediately after the pump 24 starts, actuating the associated friction device to put the transmission into power transferable state.

After hydraulic pressure build-up at the port 12b, the normal pressure regulation is effected by the line pressure regulator valve 10.

Since the flow of hydraulic fluid passing through the flow restrictor 20 of the choke type drops as the viscosity of hydraulic fluid increases in response to a temperature drop in hydraulic fluid, the period of time during which hydraulic pressure in the supply line 26 is kept high is longer when the temperature is low than the case when the temperature is high. Thus, when the fluid temperature is low, the line pressure regulator valve 10 is set into its pressure regulating states upon expiration of a considerably long time after the pump 24 starts, whereas when the fluid temperature is high or elevated, this delay is considerably shortened, thus preventing high pressure from existing for an unnecesarily long period of time after the pump 24 starts.

(Second Embodiment)

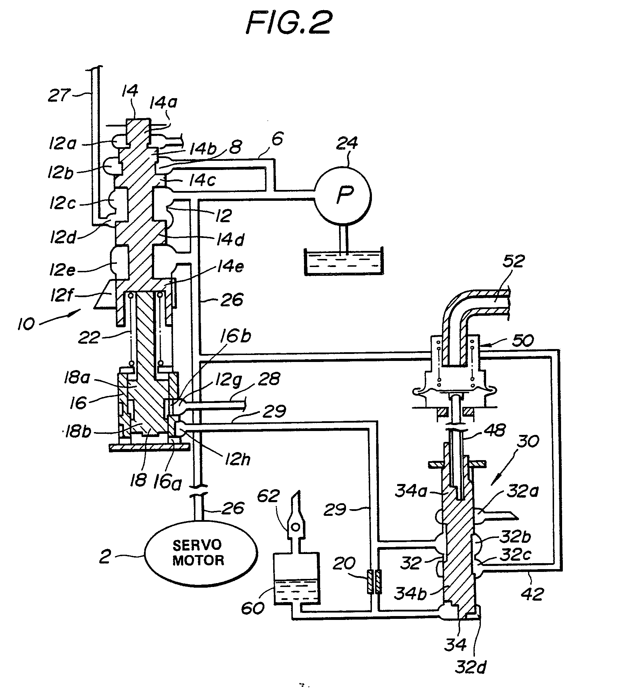

There is shown in Fig. 2 a second embodiment according to the present invention.

This embodiment is substantially the same as Fig. 1 first embodiment, but it is different from the same in that, instead of delaying pressure build-up, hydraulic pressure in a throttle boost line 29 is temporarily kept high by holding a throttle valve 30 out of its pressure regulating state during a considerable period of time after a pump 24 is set into operation. The throttle valve 30 has in a valve bore 32 thereof a spool 34. The valve bore 32 is provided with a plurality of ports 32a ~ 32d. The port 32b communicates with the throttle pressure boost line 29. Provided between the boost line 29 and the port 32d is a flow restrictor 20 of the choke type. A fluid reservoir in the form of a chamber 60 is provided between the restrictor 20 and the port 32d. The chamber 60 is provided with a one-way valve 62. Supplied to the port 32c is line pressure from a servo actuating fluid supply line 26 via a branch line 42. The port 32a is a drain port. The spool 34 has formed thereon same diameter lands 34a and 34b. Axial length of a groove defined between the lands 34a and 34b is set almost equal to axial distance between the ports 32a and 32c. Pressing force generated by a vacuum diaphragm 50 is applied to the spool 34 via a rod 48. The vacuum diaphragm 50 functions to apply a force that is inversely proportional to engine induction vacuum acting thereon from a vacuum pipe 52 to the rod 48. This construction permits the throttle valve 30 to regulate fluid pressure in the throttle boost line 44 in such a manner as to balance upward force caused by fluid pressure at the port 32d with downward force applied by the rod 48. Since, like the first embodiment, the reservoir 60 and the restrictor 20 of the choke type are used, there occurs a delay in fluid pressure build-up at the port 32d after the pump 24 starts, particularly at low temperatures. Under this condition, the port 32b remains in communication with the port 32c, and thus throttle pressure in the boost line 29 is kept as high as the pressure in the fluid line 42. Since the associated line pressure regulator valve 10 regulates hydraulic pressure in the servo actuating fluid supply line 26 in accordance with this elevated throttle pressure, the hydraulic pressure (line pressure) in the servo actuating fluid supply line 26 is kept high for a considerably long time after the oil pump 24 starts.

(Third Embodiment)

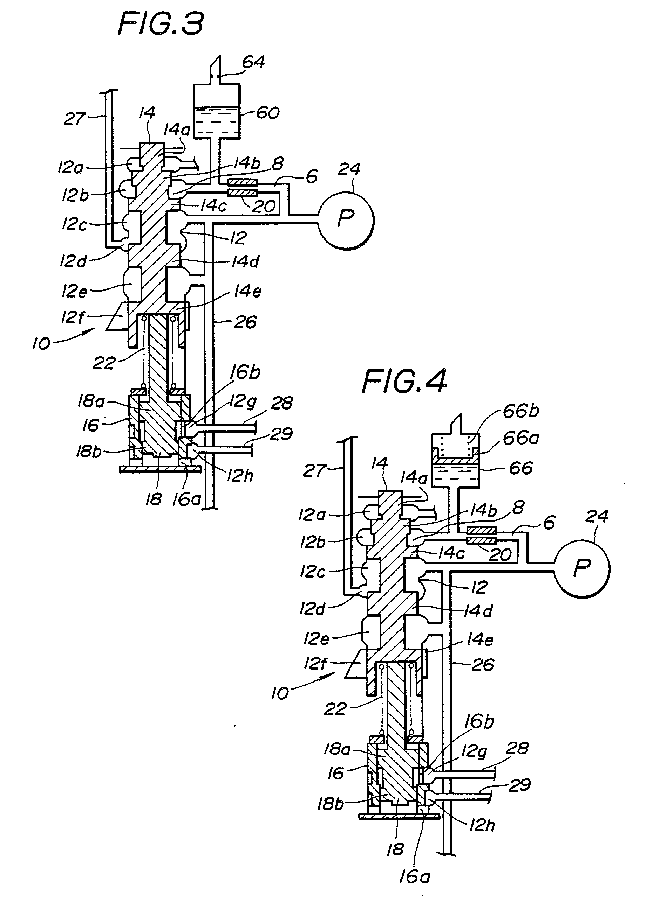

There is shown in Fig. 3 a third embodiment according to the present invention. This third embodiment is substantially the same as Fig. 1 first embodiment except the provision of a flow restrictor 64 in the place of the one-way valve 62 used in the first embodiment. Throttling effect provided by the restrictor 64 is set larger than that provided by the restrictor 20 of the choke type, so the flow rate of fluid passing through the restrictor 64 is less than that passing through the restrictor 20 of the choke type. As a result, although hydraulic fluid flows out of a chamber 60 continuously, this embodiment provides an operation similar to the first embodiment does because the flow rate of fluid passing through the restrictor 64 is considerably less than the flow restrictor 20. After all of hydraulic fluid has been discharged from the chamber 60, when a pump 24 is set into operation, hydraulic fluid is supplied to and fills the chamber 60 via the restrictor 20 although a portion of the fluid is continuously discharged via the restrictor 64. Since the hydraulic fluid is kept supplied to the chamber 60, hydraulic pressure at the port 12b is kept almost as high as that in the servo actuating fluid supply line 26.

(Fourth Embodiment)

There is shown in Fig. 4 a fourth embodiment according to the present invention. This embodiment is substantially the same as Fig. 1 first embodiment except the provision of an accumulator 66, as a reservoir, in the place of the chamber 60 and one-way valve 62 used in the first embodiment. In this fourth embodiment, when pump 24 is set into operation under the condition where the accumulator 66 is empty, hydraulic fluid entering the accumulator 66 urges the accumulator piston 66a against a spring 66b. Since the flow rate of hydraulic fluid passing through a restrictor 20 is restricted, it takes a considerably long time until the accumulator 66 is filled with hydraulic fluid after the pump 24 starts. As a result, sufficiently high pressure build-up at a port 12b does not occur during this period of time.

(Fifth Embodiment)

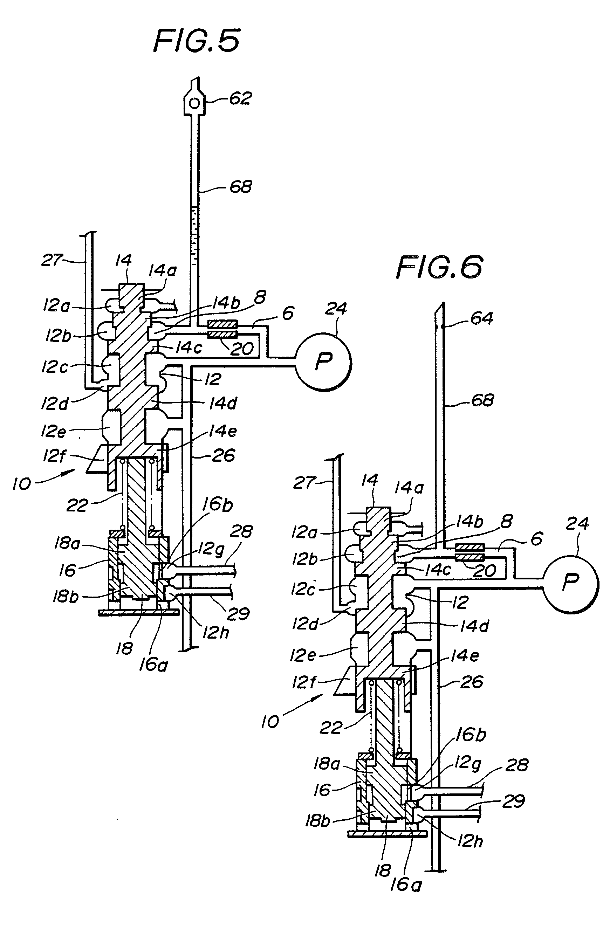

There is shown in Fig. 5 a fifth embodiment according to the present invention. This embodiment is substantially the same as the first embodiment except the provision of a long pipe 68 in the place of the fluid chamber 60 used in the first embodiment. This embodiment provides substantially the same effect as the first embodiment does only if volume of the pipe 68 is set equal to that of the chamber 60.

(Sixth Embodiment)

There is shown in Fig. 6 a sixth embodiment according to the present invention. This sixth embodiment is substantially the same as Fig. 3 third embodiment except the provision of a long tube 68 in the place of the oil chamber 60 used in the third embodiment. If provides substantially the same effect as the third embodiment does only if volume of the pipe 68 is set equal to that of the chamber 60 of the third embodiment.

In each of the previously described embodiments, a restrictor of the choke type is used, but a restrictor of the orifice type may be used instead. However, the restrictor of the orifice type cannot elongate the amount of delay in delivery of a feedback pressure as fluid temperature drops. Thus, high hydraulic pressure is maintained even at low temperature for substantially the same long time as is provided at high temperature.

Claims

1. A hydraulic pressure regulating arrangement for generating a servo actuating fluid pressure under which hydraulic fluid is supplied to a servo motor (2), comprising:

a source (4) of hydraulic fluid with temperature dependent viscosity;

means defining a servo actuating fluid supply line (26) leading to the servo motor (2);

pump means (24) for pumping hydraulic fluid out of said source (4) into said servo actuating fluid supply line (26);

a pressure regulating valve (10) having a drain port (12f) opening to said servo actuating fluid supply line (26), a feedback chamber (8) communicating with said servo actuating fluid supply line (26), and pressure responsive means (14, 22) for valving said drain port (12f) responsive to hydraulic fluid pressure within said feedback chamber (8); said pressure responsive means comprising spool means (14) and a resilient means (22) biasing said spool means (14) to a position where said spool means (14) closes said drain port (12f) and said spool means (14) having a pressure acting area subjected to hydraulic fluid pressure within the feedback chamber (8) to be urged against said resilient means (22) in a direction to increase the opening degree of said drain port (12f);

characterized in that means for defining a reservoir (60, 66, 68) is provided communicating with said servo actuating fluid supply line (26) and being capable of receiving a predetermined volume of hydraulic fluid;

that a flow restrictor means (20) is fluidly disposed between said reservoir (60, 66, 68) and said servo actuating fluid supply line (26) for restricting flow of hydraulic fluid entering said reservoir (60, 66, 68); and

that means are provided for causing said pressure responsive means to reduce opening degree of said drain port (12f) until said reservoir (60, 66, 68) is filled with said hydraulic fluid, thereby to allow high actuating servo fluid pressure to build up in said servo actuating fluid supply line (26).

2. A hydraulic pressure regulating arrangement according to claim 1, wherein said causing means includes means for establishing fluid communication between said feedback chamber (8) and said reservoir (60, 66, 68).

3. A hydraulic pressure regulating arrangement as claimed in claim 2, wherein said reservoir (60, 66, 68) includes a hydraulic fluid chamber establishing communication with the ambient atmosphere, and one-way valve means (62; 64; 66) for controlling said communication.

4. A hydraulic pressure regulating arrangement according to one of the claims 1 to 3, wherein said causing means includes:

a signal pressure regulating valve (30) having an inlet port (32c) communicating with said servo actuating fluid supply line (26), an outlet port (32b), and a fluid passage (32) connecting said inlet port (32c) with said outlet port (32b), a feedback chamber (32d), and pressure responsive means (34b), for leaving said fluid passage open responsive to hydraulic fluid pressure within said feedback chamber (32d) of said signal pressure regulating valve (30) below a predetermined value;

said reservoir (60) communicating with said servo actuating fluid supply line (26) via said outlet port (32b), said fluid passage (32), and said inlet port (32c) of said signal pressure regulating valve means (30),

said reservoir (60) communicating with said feedback chamber (32d) of said signal pressure regulating valve;

said flow restrictor means (20) fluidly disposed between said reservoir (60) and said outlet port (32b) of said signal pressure regulating valve (30), and wherein said causing means also includes:

booster means (29, 12h, 16a, 18) communicating with said outlet port (32b) of said signal pressure regulating valve (30) for urging said pressure responsive means (14) of said pressure regulating valve (10) to close said drain port (12f) in response to hydraulic pressure at said outlet port (32b) of said signal pressure regulating valve (30).

5. A hydraulic pressure regulating arrangement according to claim 4, wherein said signal pressure regulating valve (30) includes actuator means (50) responsive to loading on the engine for biasing said pressure responsive means (34) of said signal pressure regulating valve (30).

6. A hydraulic pressure regulating arrangement according to claim 4 or 5, wherein said booster means includes an end plug (18) formed with a pressure acting area (18b) which is subject to hydraulic fluid pressure at said outlet port (32b) of said signal pressure regulating valve (30), said end plug (18) being movable to act on said pressure responsive means (14) of said pressure regulating valve (10).

7. A hydraulic pressure regulating arrangement as claimed in claim 6 wherein said reservoir (60) includes a hydraulic fluid chamber establishing communication with the ambient atmosphere, and one-way valve means (62) for controlling said communication.

8. A hydraulic pressure regulating arrangement as claimed in claim 2, wherein said reservoir (60) includes a hydraulic fluid chamber establishing communication with the ambient atmosphere, and a second flow restrictor means (64) fluidly disposed in said communication, and wherein said second flow restrictor means (64) provides throttling effect larger than said first mentioned flow restrictor means (20) does.

9. A hydraulic pressure regulating arrangement as claimed in claim 8, wherein said first mentioned flow restrictor means (20) is of the choke type and said second flow restrictor means is of the orifice type (64).

10. A hydraulic pressure regulating arrangement as claimed in claim 2, wherein said reservoir (66) includes an accumulator (66a, 66b).

11. A hydraulic pressure regulating arrangement as according to claim 2, wherein said reservoir includes a tube (68) having one end communicating with the ambient atmosphere, and one-way valve means (62) for controlling communication.

12. A hydraulic pressure regulating arrangement as according to one of the claims 1 to 8, 10 or 11, wherein said flow restrictor means (20) is of the choke type.

13. A hydraulic pressure regulating arrangement as claimed in claim 2, wherein said reservoir includes a tube (68) having one end communicating with the ambient atmosphere, and a second flow restrictor means (64) fluidly disposed in said communication, and wherein said flow restrictor means (64) provides throttle effect larger than said first mentioned flow restrictor means (20) does.

14. An automatic transmission for a motor vehicle having an engine, the automatic transmission comprising a servo motor (2) and a hydraulic pressure regulating arrangement according to one of the claims 1 to 13 for generating the servo actuating fluid pressure under which hydraulic fluid is supplied to the servo motor (2).

**Patentansprüche**

1. Hydraulische Druckregelvorrichtung zur Erzeugung eines servowirkenden Fluiddruckes unter dem Hydraulikfluid einem Servomotor (2) zugeführt wird, mit:

einer Quelle (4) von Hydraulikfluid mit temperaturabhängiger Viskosität;

einer Einrichtung, die eine servowirkende Fluidzuführleitung (26) bildet, die zu dem Servomotor (2) führt;

einer Pumpeinrichtung (24) zum Pumpen von Hydraulikfluid aus der Quelle (4) heraus in die servowirkende Fluidzuführleitung (26);

einem Druckeinstellventil (10), das eine Ablaßpforte (12f), die sich zu der servowirkenden Fluidzuführleitung (26) öffnet, eine Rückführkammer (8), die mit der servowirkenden Fluidzuführleitung (26) in Verbindung steht, und druckempfindliche Einrichtungen (14, 22) aufweist zum Ventilieren der Ablaßpforte (12f) in Antwort auf Hydraulikfluiddruck in der Rückführkammer (8); wobei die druckempfindliche Einrichtung eine Abstandsringeinrichtung (14) und eine Dichtungseinrichtung (22) aufweist, die die Abstansringeinrichtung (14) in eine Position bringt, wo die Abstandringeinrichtung (14) die Ablaßpforte (12f) schließt und wobei die Abstandsringeinrichtung (14) eine druckwirkende Fläche aufweist, die Hydraulikfluiddruck in der Rückführkammer (8) unterworfen wird, um gegen die Dichtungseinrichtung (22) in eine Richtung gedrängt zu werden, um den Öffnungsgrad der Ablaßpforte (12f) zu erhöhen; dadurch gekennzeichnet,

daß eine Einrichtung zum Bilden eines Reservoirs (60, 66, 68) vorgesehen ist, die in Verbindung steht mit der servowirkenden Fluidzufuhrleitung (26) und in der Lage ist, eine vorbestimmte Menge von Hydraulikfluid aufzunehmen;

daß eine Flußbegrenzungseinrichtung (20) flüssigkeitsmäßig zwischen dem Reservoir (60, 66, 68) und der servowirkenden Fluidzuführleitung (26) vorgesehen ist, um den Fluß von Hydraulikfluid, das in das Reservoir (60, 66, 68) eintritt, zu begrenzen bzw. zu vermindern; und

daß Einrichtungen vorgesehen sind, die die druckempfindliche Einrichtung dazu veranlassen, den Öffnungsgrad der Ablaßpforte (12f) zu reduzieren, bis das Reservoir (60, 66, 68) mit dem Hydraulikfluid gefüllt ist, und dabei zu erlauben, daß sich ein hoher servowirkender Fluiddruck in der servowirkenden Fluidzuführleitung (26) aufbaut.

2. Hydraulische Druckregelvorrichtung nach Anspruch 1, wobei die Verursachungseinrichtung eine Einrichtung umfaßt zum Aufbau der Fluidverbindung zwischen der Rückführkammer (8) und dem Reservoir (60, 66, 68).

3. Hydraulische Druckregelvorrichtung nach Anspruch 2, wobei das Reservoir (60, 66, 68) eine hydraulische Fluidkammer umfaßt, die die Verbindung mit der Umgebungsatmosphäre herstellt, und eine Einwegventileinrichtung (62; 64; 66) umfaßt, für die Steuerung dieser Verbindung.

4. Hydraulische Druckregelvorrichtung nach einem der Ansprüche 1 bis 3, wobei die Betätigungseinrichtung umfaßt:

ein Signaldruckregelventil (30), das eine Einlaßpforte (32c) aufweist, die mit der servowirkenden Fluidzufuhrleitung (26) in Verbindung steht, eine Auslaßpforte (32b), und einen Fluidkanal (32), der die Einlaßpforte (32c) mit der Auslaßpforte (32b) verbindet, eine Rückführkammer (32d), und eine druckempfindliche Einrichtung (34b) umfaßt, um die Fluidpassage offenzulassen in Antwort auf Hydraulikfluiddruck in der Rückführkammer (32d) de Signaldruckregelventils (30) unter einem vorbestimmten Wert;

wobei das Resevoir (60) mit der servowirkenden Fluidzuführleitung (26) über die Auslaßpforte (32b), den Fluidkanal (32), und die Einlaßpforte (32c) der Signaldruckregelventileinrichtung (30) verbindet,

das Reservoir (60) mit der Rückführkammer (32d) des Signaldruckregelventils in Verbindung steht;

die Flußbegrenzungseinrichtung (20) fluidisch zwischen dem Reservoir (60) und der Auslaßpforte (32b) des Signalruckeinstellventils (30) angeordnet ist, und wobei die Betätigungseinrichtung ebenfalls umfaßt;

eine Verstärkereinrichtung (29, 12h, 16a, 18), die in Verbindung steht mit der Auslaßpforte (32b) des Signaldruckregelventils (30), um die druckempfindliche Einrichtung (20) des Druckeinstellventils (10) dazu zu bringen, die Ablaßpforte (12f) in Antwort auf den Hydraulikdruck an der Auslaßpforte (32b) des Signaldruckregelventils (30) zu schließen.

5. Hydraulische Druckregelvorrichtung nach Anspruch 4, wobei das Signaldruckregelventil (30) eine Betätigungseinrichtung (50) umfaßt, die auf eine Last auf den Motor antwortet, um der druckempfindliche Einrichtung (34) des Signaldruckregelventils (30) zu beaufschlagen.

6. Hydraulische Druckregelvorrichtung nach Anspruch 4 oder 5, wobei die Verstärkereinrichtung einen Endkolben (18) umfaßt, der mit einer druckwirkenden Fläche (18b) ausgebildet ist, die hydraulischen Fluiddruck an der Auslaßpforte (32b) des Signaldruckeinstellventils (30) unterworfen ist, wobei der Endkolben (18) beweglich ist, um auf die druckempfindliche Einrichtung (14) des Druckeinstellventils (10) zu wirken.

7. Hydraulische Druckregelvorrichtung nach Anspruch 6, wobei das Reservoir (60) eine Hydraulikfluidkammer umfaßt, die die Verbindung mit der Umgebungsatmosphäre schafft, und eine Einwegventileinrichtung (62) umfaßt, für die Steuerung dieser Verbindung.

8. Hydraulische Druckregelvorrichtung nach Anspruch 2, wobei das Reservoir (60) eine Hydraulikfluidkammer aumfaßt, die eine Verbindung mit der Umgebungsatmosphäre schafft, und eine zweite Flußbegrenzungseinrichtung (64), umfaßt, die fluidisch in der Verbindung angeordnet ist, und wobei die zweite Fluidbegrenzungseinrichtung (64) einen Drosseleffekt schafft, der größer ist als jener der zuerst genannten Flußbegrenzungseinrichtung (20).

9. Hydraulische Druckregelvorrichtung nach Anspruch 8, wobei die erstgenannte Flußbegrenzungseinrichtung (20), vom Drosseltyp ist und die zweite Flußbegrenzungseinrichtung vom öffnungstyp (64) ist.

10. Hydraulische Druckregelvorrichtung nach Anspruch 2, wobei das Reservoir (66) einen Akkumulator bzw. Sammler, (66a, 66b) aufweist.

11. Hydraulische Druckregelvorrichtung nach Anspruch 2, wobei das Reservoir ein Rohr (68) umfaßt, von dem ein Ende mit der Umgebungsatmosphäre in Verbindung steht und eine Einwegventileinrichtung (62) umfaßt, zum Steuern der Verbindung.

12. Hydraulische Druckregelvorrichtung nach einem der Ansprüche 1 bis 8, 10 oder 11, wobei die Flußbegrenzungseinrichtung (20) vom Drosseltyp ist.

13. Hydraulische Druckregelvorrichtung nach Anspruch 2, wobei das Reservoir ein Rohr (68) aufweist, von dem ein Ende mit der Umgebungsatmosphäre in Verbindung steht und eine Flußbegrenzungseinrichtung (64) fluidisch in dieser Verbindung angeordnet ist, wobei die Flußbegrenzungseinrichtung (64) einen Drosseleffekt liefert, der größer ist als jener der erstgenannten Flußbegrenzungseinrichtung (20).

14. Automatisches Getriebe für ein Kraftfahrzeug mit einem Motor, wobei das automatische Getriebe einen Servomotor (2) und eine hydraulische Druckregelanordnung nach einem der Ansprüche 1 bis 13 aufweist, zur Erzeugung des servowirkenden Fluiddruckes, unter dem Hydraulikfluid zu dem Servomotor (2) zugeführt wird.

**Revendications**

1. Dispositif hydraulique de régulation de pression pour produire une pression de fluide actionnant un asservissement, à laquelle du fluide hydraulique est fourni à un servomoteur (2), comprenant:

une source (4) de fluide hydraulique avec un viscosité dépendent de la tepérature;

un moyen définissant une ligne d'alimentation du fluide d'actionnement d'asservissement (26) conduisant au servomoteur (2);

un moyen formant pompe (24) pour pomper le fluide hydraulique hors de ladite source (4) dans ladite ligne d'alimentation de fluide d'actionnement d'asservissement (26);

une soupape régulatrice de pression (10) ayant un orifice de vidange (12f) débouchant dans ladite ligne d'alimentation de fluide d'actionnement d'asservisement (26), une chambre de réaction (8) communiquant avec ladite ligne (26) d'alimentation en fluide d'actionnement d'asservisement et un moyen sensible à la pression (14, 22) pour régler l'ouverture de l'orifice de vidange (12f) en réponse à la pression du fluide hydraulique dans ladite chambre de réaction (8); ledit moyen sensible à la pression comprenant un moyen formant corps (14) et un moyen élastique (22) sollicitant ledit moyen formant corps (14) à une position où ledit moyen formant corps (14) ferme ledit orifice de vidange (12f) et ledit moyen formant corps (14) ayant une surface d'action de pression soumise à la pression du fluide hydraulique dans la chambre de réaction (8) pour être sollicité contre ledit moyen élastique (22) dans une direction pour augmenter le degré d'ouverture dudit orifice de vidange (12f); caractérisé en

ce qu'un moyen pour définir un réservoir (60, 66, 68) permet la communication avec ladite ligne d'alimentation de fluide d'actionnement d'asservissement (26) et est capable de recevoir un volume prédéterminé du fluide hydraulique;

ce qu'un moyen de restriction d'écoulement (20) est disposé de manière fluide entre ledit réservoir (60, 66, 68) et ladite ligne d'alimentation de fluide d'actionnement d'asservissement (26) pour restreindre l'écoulement du fluide hydraulique entrant dans ledit réservoir (60, 66, 68); et

ce que des moyens sont prévus pour forcer ledit moyen sensible à la pression à réduire le degré d'ouverture dudit orifice de vidange (12f) jusqu'à ce que ledit réservoir (60, 66, 68) soit rempli dudit fluide hydraulique, pour ainsi permettre à une haute pression de fluide d'actionnement d'asservissement de s'accumuler dans ladite ligne d'alimentation de fluide d'actionnement d'asservissement (26).

2. Dispositif hydraulique de régulation de pression selon la revendication 1, où ledit moyen forçant comprend un moyen pour établir la communication de fluide entre ladite chambre de réaction (8) et ledit réservoir (60, 66, 68).

3. Dispositif hydraulique de régulation de pression selon la revendication 2, où ledit réservoir (60, 66, 68) comprend une chambre de fluide hydraulique établissant la communication avec l'atmosphère ambiante, et un moyen formant soupape à une voie (62; 64; 66) pour contrôler ladite communication.

4. Dispositif hydraulique de régulation de pression selon l'une des revendications 1 à 3, où ledit moyen forçant comprend:

une soupage régulatrice de pression de signal (30) ayant un orifice d'entrée (32c) communiquant avec ladite ligne d'alimentation de fluide d'actionnement d'asservissement (26), un orifice de sortie (32b) et un passage de fluide (32) connectant ledit orifice d'entrée (32c) audit orifice de sortie (32b), une chambre de réaction (32d) et un moyen sensible à la pression (34b) pour laisser ledit passage de fluide ouvert en réponse à la pression du fluide hydraulique dans ladite chambre de réaction (32d) de ladite soupage régulatrice de pression de signal (30) en-dessous d'une valeur prédéterminée;

ledit réservoir (60) communiquant avec ladite ligne d'alimentation en fluide d'actionnement d'asservissement (26) via ledit orifice de sortie (32b), ledit passage de fluide (32) et ledit orifice d'entrée (32c) dudit moyen formant soupage régulatrice de pression de signal (30),

ledit réservoir (60) communiquant avec ladite chambre de réaction (32d) de ladite soupage de régulation de pression de signal;

ledit moyen de restriction d'écoulement (20) disposé de manière fluide entre ledit réservoir (60) et ledit orifice de sortie (32b) de ladite soupapage régulatrice de pression de signal (30) et en ce que ledit moyen forçant comprend également:

un moyen surpresseur (29, 12h, 16a, 18) communiquant avec ledit orifice de sortie (32b) de ladite soupape régulatrice de pression de signal (30) pour solliciter ledit moyen sensible à la pression (14) de ladite soupape régulatrice de pression (10) à fermer ledit orifice de vindage (12f) en réponse à la pression hydraulique audit orifice de sortie (32b) de ladite soupape régulatrice de pression de signal (30).

5. Dispositif hydraulique de régulation de la pression selon la revendication 4, où ladite soupape régulatrice de pression de signal (30) comprend un moyen d'actionnement (50) répondant à la charge sur le moteur pour solliciter ledit moyen sensible à la pression (34) de ladite soupape régulatrice de pression de signal (30).

6. Dispositif hydraulique de régulation de pression selon la revendication 4 ou 5, où ledit moyen surpresseur comprend un bouchon extrême (18) présentant un zone d'action de pression (18b) qui est soumise à la pression du fluide hydraulique audit orifice de sortie (32b) de ladite soupape régulatrice de pression de signal (30), ledit bouchon extrême (18) étant mobile pour agir sur ledit moyen sensible à la pression (14) de ladite soupape régulatrice de pression (10).

7. Dispositif hydraulique de régulation de pression selon la revendication 6, où ledit réservoir (60) comprend une chambre de fluide hydraulique établissant la communication avec l'atmosphère ambiante, et un moyen formant vanne à une voie (62) pour contrôler ladite communication.

8. Dispositif hydraulique de régulation de pression selon la revendication 2, où ledit réservoir (60) comprend une chambre de fluide hydraulique établissant la communication avec l'atmosphère ambiante et un second moyen de restriction d'écoulement (64), disposé de manière fluide dans ladite communication, et en ce que ledit second moyen de restriction d'écoulement (64) produit un effet d'étranglement plus grand que ledit premier moyen mentionné de restriction d'écoulement (20).

9. Dispositif hydraulique de régulation de pression selon la revendication 8, où ledit premier moyen mentionné de restriction d'écoulement (20) est du type étrangleur et ledit second moyen de restriction d'écoulement est du type à orifice (64).

10. Dispositif hydraulique de régulation de pression selon la revendication 2, où ledit réservoir (66) comprend un accumulateur (66a, 66b).

11. Dispositif hydraulique de régulation de pression selon la revendication 2, où ledit réservoir comprend un tube (68) dont une extrémité communique avec l'atmosphère ambiante et un moyen formant vanne à une voie (62) pour contrôler la communication.

12. Dispositif hydraulique de régulation de pression selon l'une quelconque des revendications 1 à 8, 10 ou 11 où ledit moyen de restriction d'écoulement (20) est du type étrangleur.

13. Dispositif hydraulique de régulation de pression selon la revendication 2, où ledit réservoir comprend un tube (68) dont une extrémité communique avec l'atmosphère ambiante, et un second moyen de restriction d'écoulement (64) disposé de maninère fluide dans ladite communication et où ledit moyen de restriction d'écoulement (64) produit un effet d'étranglement plus grand que ledit premier moyen mentionné de restriction d'écoulement (20), ne le fait.

14. Transmission automatique pour un véhicule automobile ayant un moteur, la transmission automatique comprenant un servomoteur (2) et un dispositif hydraulique de régulation de pression selon l'une des revendications 1 à 13 pour produire la pression de fluide d'actionnement d'asservissement à laquelle le fluide hydraulique est fourni au servomoteur (2).

# FIG.1

SERVO MOTOR

P

# FIG.2

# FIG.3

# FIG.4

# FIG.5

# FIG.6